# EUROPEAN PATENT APPLICATION

(11) **EP 4 507 062 A1**
(43) Date of publication of application: **12.02.2025**
(21) Application number: 23205489.0
(22) Date of filing: 24.10.2023
(51) Int. Cl.: H01M 10/36, H01M 50/446, H01M 50/451

(54) **HIGH TEMPERATURE RESISTANT SEPARATOR**

(30) Priority: 11.08.2023 TW 112130236
(71) Applicant: BenQ Materials Corporation, Taoyuan City 33341 (TW)
(72) Inventor: TSAI, Tzung-Yu, 33341 Taoyuan City (TW); HUANG, Ju-Hui, 33341 Taoyuan City (TW)
(74) Representative: Murgitroyd & Company

(57) **Abstract**

A high temperature resistant separator is disclosed. The high temperature resistant separator comprises a porous film having a porous polyolefin substrate with a plurality of first porous structures and a inorganic layer, wherein the inorganic layer includes a plurality of inorganic particles and a binder, and the inorganic layer is formed on at least one surface of the porous polyolefin substrate, to form a plurality of second porous structures communicating with the first porous structures of the polyolefin porous substrate; and a heat-resistant enhancement layer formed on a surface of the porous film and inner walls of the first porous structures and the second porous structures, wherein the heat-resistant enhancement layer is a composite layer formed by cross-linking a titanium alkoxide, a photoreactive agent, the polyolefin and/or the binder of the surface and the inner walls of the first porous structures and the second porous structures of the porous film.

## Description

### CROSS - REFERENCE TO RELATED APPLICATION

This application claims the benefit of Taiwanese patent application serial No.112130236, filed on August 11, 2023, the subject matters of which are incorporated herein by reference.

### BACKGROUND OF THE INVENTION

### Field of Invention

The invention relates to a high temperature resistant separator, and more particularly to a high temperature resistant separator with a heat-resistant enhancement layer.

### Description of Related Art

During the operation of lithium-ion batteries in high-temperature environments, improper use or damage by external forces, abnormal electrochemical reactions may occur inside the battery to result in the increase of battery temperature. The separator commonly used in the battery is polyolefin as substrate, it may be molten when the temperature is over its melting point, about 130°C, and goes to shrinkage and deform or even to be molten down to rupture, if the thermal runaway occurs due to the electrode active material decomposed to cause the temperature sharply rising. Thus, at high temperature, the battery separator may not sufficiently keep the positive and negative electrodes apart to prevent from short circuits which may result in accelerating the electrochemical reaction and causing greater harm.

Conventionally, for increasing the melt integrity of the battery separator, it has been suggested to use crosslinked polyolefin with higher rupture temperature or coating inorganic layer on the surface or inner sidewalls of porous structures of porous substrate to lower the thermal shrinkage rate. However, even the crosslinked polyolefin can increase the rupture temperature of the polyolefin, it still has limitation to improve the thermal shrinkage rate when polymer chain of the polyolefin is softened under temperature above the melting point thereof. In addition, the porous polyolefin film is manufactured by uniaxial or dual-axial stretching method, and the stretching rates on the machine direction and transverse directions of the film are not consistent and thus, the film will be curly deformed to fail to sufficient separate the positive and negative electrodes at elevated temperature. For the battery separator with inorganic coating, the coating should contain enough particles to lower the thermal shrinkage rate. However, the inorganic layer currently used in the state of art should contain binders to bonding the inorganic particles and coating on the surface of the polyolefin film. The large amount of inorganic particles may block the porous structures of the polyolefin film to cause high impedance of the separator. The shrinkage rate of the inorganic particles and binders of the inorganic layer is different from that of the polyolefin film at elevate temperature, and that will result in the inorganic layer and the polyolefin film to break down so that the electrochemical reaction is unable to postpone to occur.

It has been suggested to coat a hydrogen-abstracted photo-initiator on the porous polyolefin film during the polyolefin film manufacture to create cross-linking bonds on the surface of the porous film after radiation, or adding the photo-initiator into the inorganic coating layer coated on the porous substrate. Although these suggestions can improve the rupture temperature of the porous polyolefin film, the high-temperature thermal shrinkage of the film still cannot be satisfied.

Therefore, there is a demand to a high temperature resistant separator with satisfied thermal-shrinkage.

### SUMMARY OF THE INVENTION

This present invention discloses a high temperature resistant separator with a high thermal rupture temperature and low thermal shrinkage at high temperature, and consistent thermal shrinkage in all directions to prevent from curl deformation.

The present invention discloses a high temperature resistant separator comprising a porous film which comprises a porous polyolefin substrate with a plurality of first porous structures and an inorganic layer, wherein the inorganic layer comprises a plurality of inorganic particles and a binder, and the inorganic layer is coated on at least one surface of the porous polyolefin substrate to form a plurality of second porous structures communicating with the first porous structures of the polyolefin porous substrate; and a heat-resistant enhancement layer formed on the surface and the inner walls of the first porous structures and the second porous structures of the porous film, wherein the heat-resistant enhancement layer is a composite layer formed by cross-linking a titanium alkoxide, a photo-reactive agent, the polyolefin and/or the binder of the surface and the inner walls of the first porous structures and the second porous structures of the porous film.

In the high temperature resistant separator of an embodiment of the present invention, the thermal shrinkage rate of the high temperature resistant separator after heating at 180°C for 1 hour is less than 1% in all directions.

In the high temperature resistant separator of an embodiment of the present invention, the titanium alkoxide is titanium methoxide, titanium ethoxide, titanium isopropoxide, or combinations thereof.

In the high temperature resistant separator of another preferred embodiment of the present invention, the photo-reactive agent is 2-isopropylthioxanthone, thioxanthone, thioxanthone derivatives or combinations thereof.

In the high temperature resistant separator of another embodiment of the present invention, the porous polyolefin substrate is a porous substrate of single-layered or multi-layered polyethylene, polypropylene or the copolymer thereof.

In the high temperature resistant separator of another embodiment of the present invention, the inorganic layer comprises 80 wt% to 99 wt% inorganic particles and 1 wt% to 20 wt% binder. The thickness of the inorganic layer ranges between 0.5 µm and 5 µm and preferably ranges between 0.5 µm and 3 µm.

In the high temperature resistant separator of an embodiment of the present invention, the inorganic particles are Al₂O₃, Al(OH)₃, Boehmite (AlOOH), TiO₂, SiO₂, Mg(OH)₂, BaSO₄, BaTiO₃, SrTiO₃, HfO₂, SnO₂, CeO₂, MgO, NiO, CaO, ZnO, ZrO₂, SiC, B4C, AlN, BN, Si₃N₄, TiN or combinations thereof.

In an embodiment of the present invention, the particle size (D50) of the inorganic particles ranges between 0.1 µm and 2.0 µm.

In another embodiment of the present invention, the binder is ethylene-vinyl acetate copolymer (EVA), poly(meth)acrylate, cross-linked (meth)acrylic resin, polyacrylamide (PAM), fluororubber, styrene-butadiene rubber (SBR), polyvinyl alcohol (PVA), polyvinyl butyral (PVB), polyvinylpyrrolidone (PVP), poly-n-vinyl acetamide, polyvinylidene fluoride (PVDF), polyurethane, or combinations thereof.

In another embodiment of the present invention, the heat-resistant enhancement layer of the high temperature resistant separator further comprises a crosslinking auxiliary agent, the crosslinking auxiliary agent is divinyl benzene, bisphenol-A dimethacrylate, bisphenol-A epoxy diacrylate, and triallyl cyanurate, triallyl isocyanurate, pentaeritritol triallyl ether, butanediol diacrylate, diethyleneglycol diacrylate, or the like.

Another aspect of the present invention is to provide a method for preparation of high temperature resistant separator, which comprises the steps of providing a porous film, the porous film comprising a porous polyolefin substrate with a plurality of first porous structures and an inorganic layer, wherein the inorganic layer comprises a plurality of inorganic particles and a binder, and the inorganic layer is coated on at least one surface of the porous polyolefin substrate to form a plurality of second porous structures communicating with the first porous structures of the polyolefin porous substrate; preparing a thermal-resistance precursor solution comprising 600 ppm to 3000 ppm of titanium alkoxide and 150 ppm to 1500 ppm of a photo-reactive agent; applying the thermal-resistance precursor solution to the porous film and irradiating UV light to form a heat-resistant enhancement layer on the surface and inner walls of the first porous structures and the second porous structures of the porous film, wherein the heat-resistant enhancement layer is a composite layer formed by cross-linking a titanium alkoxide, a photo-reactive agent, the polyolefin and/or the binder of the surface and inner walls of the first porous structures and the second porous structures of the porous film.

In the method for preparation of a high temperature resistant separator of the present invention, the titanium alkoxide in the thermal-resistance precursor solution is titanium methoxide, titanium ethoxide, titanium isopropoxide or the combinations thereof, and the solvent is methanol, ethanol, isopropanol, or combinations thereof.

In the method for preparation of a high temperature resistant separator of the present invention, the photo-reactive agent in the thermal-resistance precursor solution is 2-isopropylthioxanthone, thioxanthone, thioxanthone derivatives or combinations thereof.

In the method for preparation of high temperature resistant separator, the thermal-resistance precursor solution further comprises a crosslinking auxiliary agent, and the crosslinking auxiliary agent is divinylbenzene, bisphenol-A dimethacrylate, bisphenol-A epoxydiacrylate, triallyl cyanurate, triallyl isocyanurate, pentaerythritol triallyl ether, butanediol diacrylate, ethylene glycol diacrylate, or combinations thereof.

The above and other aspects of the invention will become better understood with regard to the following detailed description of the preferred but non-limiting embodiment(s). These and other aspects of the invention will become apparent from the following description of the presently preferred embodiments. The detailed description is merely illustrative of the invention and does not limit the scope of the invention, which is defined by the appended claims and equivalents thereof. As would be obvious to one skilled in the art, many variations and modifications of the invention may be affected without departing from the spirit and scope of the novel concepts of the disclosure.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.
Figs. 1a and 1b are color pictures showing the appearance images of the separators of the Comparative Examples of the present invention after crack test at a high temperature.
Fig. 2 is a color picture showing the appearance image of the separator of one Example of the present invention after crack test at a high temperature.

### DETAILED DESCRIPTION OF THE INVENTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

In the following description, numerous specific details are described in detail in order to enable the reader to fully understand the following examples. However, embodiments of the present invention may be practiced in case no such specific details.

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below are those well-known and commonly employed in the art.

The present invention discloses a high temperature resistant separator comprising a porous film which comprises a porous polyolefin substrate with a plurality of first porous structures and an inorganic layer, wherein the inorganic layer comprises a plurality of inorganic particles and a binder, the inorganic layer is coated on at least one surface of the porous polyolefin substrate to form a plurality of second porous structures communicating with the first porous structures of the polyolefin porous substrate; and an heat-resistant enhancement layer formed on the surface and the inner walls of the first porous structures and the second porous structures of the porous film, wherein the heat-resistant enhancement layer is a composite layer formed by cross-linking a titanium alkoxide, a photo-reactive agent, the polyolefin and/or the binder of the surface and inner walls of the porous structures and the second porous structures of the porous film.

The high temperature resistant separator disclosed in the present invention is provided by directly forming a heat-resistant enhancement layer on the surface and inner walls of the first porous structures and the second porous structures of the porous film to enhance thermal resistance and structural integrity thereof. The heat-resistant enhancement layer enables the present high temperature resistant separator to achieve a high thermal rupture temperature, high thermal puncture resistance and low thermal-shrinkage, and consistent thermal shrinkage in all directions to prevent from curl or deformation.

The heat-resistant enhancement layer of the present high temperature resistant separator is a composite layer formed by applying a thermal-resistance precursor solution comprising a titanium alkoxide and a photo-reactive agent on the porous film and irradiating by UV light to crosslink with the polyolefin and/or binder at the surface and the inner walls of the first porous structures and the second porous structures of the porous film.

For converting the saturated and stable carbon bonds in the porous polyolefin substrate to have reactivity to participate crosslinking reaction, UV light can be used to irradiate photo-reactive agents and porous polyolefin substrate with carbon-hydrogen bonds, wherein the photo-reactive agents and the porous polyolefin substrate with carbon-hydrogen bonds at the surface of the porous polyolefin substrate are able to form free radicals by hydrogen abstraction simultaneously in order to have a crosslinking reaction on the surface and the sidewalls of the first porous structures of porous polyolefin substrate and the second porous structures with saturated and stable carbon bonds. Except of the porous polyolefin substrate and the photo-reactive agent, titanium alkoxide and the binders in the present high temperature resistant separator also comprise carbon-hydrogen bonds. Thus, when sufficient radiation of UV light is provided, the carbon-hydrogen bonds in the surface of the porous polyolefin substrate, in the photo-reactive agent, in the titanium alkoxide and in the binders in the inorganic layer will create reactive free radicals to conduct the crosslinking reaction in order to generate a composite layer on the surface of the porous film and inner walls of the first porous structures and the second porous structures, which is cross-linked by the polyolefin, photo-reactive agent, titanium alkoxide and/or binders. The titanium alkoxide can further reactive with the alcohol solution to generate titanium oxide, the structure is similar to the inorganic particles in inorganic layer to reinforce the stability of the covalent bonding of the inorganic particles. The covalent bond structure of the inorganic particles, such as metal-containing or silicon-containing oxide or hydroxide will not be affected by the UV irradiation.

In an embodiment of the present high temperature resistant separator, the titanium alkoxide in the heat-resistant enhancement layer can be a titanium alkoxide with carbon-hydrogen bonds, such as titanium methoxide, titanium ethoxide, titanium isopropoxide, or the combinations thereof.

In an embodiment of the present high temperature resistant separator, the photo-reactive agent is 2-isopropylthioxanthone, thioxanthone, thioxanthone derivatives or combinations thereof. The photo-reactive agent is used to form free radicals by hydrogen abstraction.

In another embodiment of the present high temperature resistant separator, the heat-resistant enhancement layer is a composite layer formed on the surface and the inner walls of the porous structures of the porous film by free radical reaction of crosslinking the titanium alkoxide, photo-reactive agent, and the porous polyolefin substrate of the porous film and the binder of the inorganic layer. The present high temperature resistant separator can obtain an enhanced thermal stability without use of high concentration ( ≦ 3000 ppm) of titanium alkoxide in oxide form to deposit on the surface of the inorganic layer and inner walls of the porous structures.

In another embodiment of the present high temperature resistant separator, the crosslinking composite layer of the heat-resistant enhancement layer enables that the thermal shrinkage rate of the present high temperature resistant separator is less than 1% in all directions after heating at 180°C for 1 hour. The term "thermal shrinkage rate in all directions" means the shrinkage rate in machine direction (MD) and the transverse direction (TD) of the high temperature resistant separator. In still another embodiment of the present high temperature resistant separator, the ratio of the shrinkage rate in matching direction and the transverse direction is nearly 1. Thus, the present high temperature resistant separator can maintain a consistent shrinkage stress in all directions to prevent the contact of the electrodes due to the curl or deformation caused by the thermal shrinkage.

In an embodiment of the high temperature resistant separator of the present invention, the thermal rupture temperature of the high temperature resistant separator is above 280°C and preferably above 300°C. The thermal rupture temperature of conventional ceramic coating separator without heat-resistant enhancement layer with crosslinking composite structure is merely about 150°C to 170°C. Therefore, the present high temperature resistant separator has melting integrity at high temperature.

In an embodiment of the high temperature resistant separator of the present invention, the porous polyolefin substrate can be a single-layered or multi-layered porous substrate of polyethylene, polypropylene or the copolymer thereof, for example but not limited to single-layered polyethylene, single-layered polypropylene, double-layered polyethylene/polypropylene or tri-layered polypropylene/polyethylene/polypropylene. In an embodiment of the present invention, the porous polyolefin substrate has a thickness of 5 µm to 30 µm, and preferably 7 µm to 25 µm and has a porosity of 30% to 60%.

In an embodiment of the high temperature resistant separator of the present invention, the inorganic layer is coated on at one surface of the porous polyolefin substrate and comprises 80wt% to 99wt% inorganic particles and 1wt% to 20wt% binder. The thickness of the inorganic layer of the present high temperature resistant separator ranges between 0.5 µm and 5 µm, and is preferably between 0.5 µm and 3 µm on one side or both sides of the porous polyolefin substrate, and preferably on both sides.

In an embodiment of the present invention, the inorganic particles can be Al₂O₃, Al(OH)₃, Boehmite (AlOOH), TiO₂, SiO₂, Mg(OH)₂, BaSO₄, BaTiO₃, SrTiO₃, HfO₂, SnO₂, CeO₂, MgO, NiO, CaO, ZnO, ZrO₂, SiC, B₄C, AlN, BN, Si₃N₄, TiN or the combination thereof. Furthermore, the size of the gaps formed between inorganic particles affects the electrical properties of battery. When the particle size of the inorganic particles is too large, the gaps between the particles become too large to cause the generation of the lithium dendrites, and which may induce short circuits. Therefore, the average particle diameter (D50) of the inorganic particles can be in the range of 0.1 µm to 2.0 µm and preferably in the range of 0.2 µm to 1.0 µm.

The binders suitable for the inorganic layer of the porous film can comprise carbon-hydrogen bond and can be the one suitably used in the separator field, such as binders having high electrochemical stability, good wettability and chemical resistance to the electrolyte. In another embodiment of the present invention, the binder can be ethylene-vinyl acetate copolymer (EVA), poly(meth)acrylate, cross-linked (meth)acrylic resin, polyacrylamide (PAM), fluororubber, styrene-butadiene rubber (SBR), polyvinyl alcohol (PVA), polyvinyl butyral (PVB), polyvinylpyrrolidone (PVP), poly-n-vinyl acetamide, polyvinylidene fluoride (PVDF), polyurethane, or combinations thereof.

Another aspect of the present invention is to provide a method for preparation of high temperature resistant separator, which comprises the steps of providing a porous film, the porous film comprising a porous polyolefin substrate with a plurality of first porous structures and an inorganic layer, wherein the inorganic layer comprises a plurality of inorganic particles and a binder, and the inorganic layer is coated on at least one surface of the porous polyolefin substrate to form a plurality of second porous structures communicating with the first porous structures of the porous polyolefin substrate; preparing a thermal-resistance precursor solution comprising 600 ppm to 3000 ppm of titanium alkoxide and 150 ppm to 1500 ppm of a photo-reactive agent; applying the thermal-resistance precursor solution to the porous film and irradiating UV light to form a heat-resistant enhancement layer on the surface and inner walls of the first porous structures and the second porous structures of the porous film, wherein the heat-resistant enhancement layer is a composite layer formed by cross-linking a titanium alkoxide, a photo-reactive agent, the polyolefin and/or the binder of the surface and inner walls of the first porous structures and the second porous structures of the porous film.

In the method for preparation of a high temperature resistant separator of the present invention, the titanium alkoxidet in the thermal-resistance precursor solution is titanium methoxide, titanium ethoxide, titanium isopropoxide or the combinations thereof and the solvent used is methanol, ethanol, isopropanol, or combinations thereof. The concentrate of the titanium alkoxide in the thermal-resistance precursor solution is in the range of 600 ppm to 3,000 ppm, and preferably in the range of 600 ppm to 2,500 ppm.

In the method for preparation of a high temperature resistant separator of the present invention, the photo-reactive agent of the thermal-resistance precursor solution is 2-isopropylthioxanthone, thioxanthone, thioxanthone derivatives or the combinations thereof. The concentration of the photo-reactive agent of the thermal-resistance precursor solution is in the range of 150 ppm to 1500 ppm, and preferably is in the range of 150 ppm to 1000 ppm.

In the method for preparation of a high temperature resistant separator of the present invention, the thermal-resistance precursor solution further comprises a crosslinking auxiliary agent to reinforce the structure of high temperature resistant separator. The crosslinking auxiliary agent suitably used in the present thermal-resistance precursor solution is divinylbenzene, bisphenol-A dimethacrylate, bisphenol-A epoxydiacrylate, triallyl cyanurate, triallyl isocyanurate, pentaerythritol triallyl ether, butanediol diacrylate, ethylene glycol diacrylate, or combinations thereof. In an embodiment of the present invention, the use amount of the crosslinking auxiliary agent can be in the range of 100 ppm to 2000 ppm.

In an embodiment of the present high temperature resistant separator, the wavelength of the irradiation for forming the heat-resistant enhancement layer ranges between 340 nm and 460 nm in a dose of 10 mJ/cm² to 1000 mJ/cm².

In an embodiment of the present high temperature resistant separator, the heat-resistant enhancement layer can be formed on the surface and inner walls of the porous structures of the porous film by spray coating, immersion/dip coating, roll coating, blade coating or slot-die coating.

In an embodiment of the present high temperature resistant separator, the heat-resistant enhancement layer can further optionally comprise antistatic agents, flame retardants, antioxidants, or surface modifiers.

The present invention will be explained in further detail with reference to the examples. However, the present invention is not limited to these examples.

### Example

### Preparation Example: Preparation of inorganic particles coating solution

38 g of Al₂O₃ particles (CQ-030EN, available from Shandong Sinocera Functional Materials Co., Ltd., CN), 3.4 g of polyacrylate, 0.68 g of dispersant (BYK-154, solid content 42%, available from BYK, Germany), 0.13 g of polyether-modified silicone surfactant (BYK-349, available from BYK, Germany) and 52.9 g of deionized water were mixed and well-stirred to obtain an inorganic particles coating solution.

### Preparation Example: Preparation of porous film

The obtained inorganic particles coating solution was coated on both sides of a polyethylene porous substrate with a thickness of 9 µm (porosity of 48%). After drying, the inorganic layers with thickness of 2 µm were formed on both surfaces of the polyethylene porous substrate to obtain a porous film.

### Example 1: Preparation of high temperature resistant separator

100 g of isopropanol was mixed and stirred with 250 mg of titanium isopropoxide and 25 mg of 2-isopropylthioxanthon to obtain a thermal-resistance precursor solution.

The porous film obtained in the Preparation Example was immersed in a thermal-resistance precursor solution for 30 seconds, took out and removed liquid residue, dried at 60°C for 5 minutes and irradiated under air environment with wavelength of 360 nm for a dose of 500 mJ/cm² to obtain a high temperature resistant separator with a cross-linked heat-resistant enhancement layer on the surface of the porous structures and the porous film.

The properties and the thermal stability of the obtained high temperature resistant separator was determined by the following methods. The testing results were shown as the following Table 1.

Measurement of Gurley number: The Gurley number was measured according to ASTM D-726. The separator was cut into a sample of 1 inch × 1 inch and tested by an air permeability tester. The Gurley number was obtained by measuring the time for 100 C.C. of air to pass through the separator.

Tensile strength test: The tensile strength was tested according to ASTM D882-09. the separator was cut along the machine direction (MD) and the transverse direction (TD) to obtain a sample with a width of 10 mm and a length ≥ 150 mm. The obtained sample was tested by utilizing a universal tensile machine to stretch at a rate of 500 mm/min to obtain the maximum load during the broken of the sample. The tensile strength in the machine direction (MD) and the tensile strength in the transverse direction (TD) were respectively calculated by dividing the maximum load with the cross-sectional area of the separator (width of the sample × the thickness of the substrate).

Puncture resistance and Thermal puncture resistance: according to ASTM D2582, the puncture resistance of a separator was determined by tensile tester (MSG-5, available from Kato Tech, Japan). The separators were punctured by a round head stainless steel needle with a diameter of 1 mm and a corner radius of 0.5 mm with at a speed of 100 ± 10 mm/min. The maximum force for puncturing the separator was recorded as initial puncture resistance(S0). And the separator was heated at 150 °C for 1 hour, the puncture resistance of the heated separator was determined by the same manners and recorded the maximum force for puncturing the heated separator as thermal puncture resistance (S 1).

Thermal shrinkage test: The separator was cut into a sample of 10 cm × 10 cm, and the initial length in machine direction (MD) and the initial length in transverse direction (TD) were measured and marked as M0 and T0 on the center of the sample before testing. Then the marked sample was sandwiched between two A4 papers and heated in an oven at 180°C for 1 hr. After heating, the sample was cooled down and measured the length in machine direction (MD) and the length in transverse direction (TD) marked as M1 and T1, respectively. The thermal shrinkage in machine direction (MD) rate is calculated by the following formula: (M0-M1)/M0 × 100%. The thermal shrinkage in transverse direction (TD) rate is calculated by the following formula: (T0-T1)/T0 × 100%. If the sample is too curly deformed or even crack to measure the shrinkage, it is marked as "NG".

Rupture Temperature/Melt integrity: The separator was cut into a separator sample with a length of 8 mm and a width of 4.5 mm, and then the separator sample was placed into a sample tank of thermomechanical analyzer (TMA 450, available from TA Instruments, U.S.A.) under the load of 0.01N and heated up to 350°C at a heating rate of 5°C/min. Under a fixed load of 0.01N, the separator sample reaches the heating limit with the increase of temperature, and the separator sample is determined as breaking when the deformation of the separator sample reaches the maximum value, and the temperature of breaking is defined as the thermal rupture temperature.

Crack test at a high temperature: The separator for testing is cut into a sample of 10 cm × 10 cm, and placed in an oven at 250°C for 1 hour. The sample was then taken out and visually observed to check if there was a crack appeared. Mark "X" means there is a crack appeared on the separator or crack to pieces; Mark "O" means there is no crack appeared on the separator.

### Example 2: Preparation of high temperature resistant separator

The high temperature resistant separator with heat-resistant enhancement layer was prepared by the manners same as Example 1, except that the thermal-resistance precursor solution was instead by a thermal-resistance precursor solution which was prepared by mixing 100 g of isopropanol with 125 mg of titanium isopropoxide and 50 mg of 2-isopropylthioxanthon.

The properties and the thermal stability of the obtained high temperature resistant separator were determined by the measurements described in Example 1. The testing results were shown as the following Table 1.

### Example 3: Preparation of high temperature resistant separator

The high temperature resistant separator with heat-resistant enhancement layer was prepared by the manners same as Example 1, except that the thermal-resistance precursor solution was instead by a thermal-resistance precursor solution which was prepared by mixing 100 g of isopropanol with 250 mg of titanium isopropoxide and 50 mg of 2-isopropylthioxanthon.

The properties and the thermal stability of the obtained high temperature resistant separator were determined by the measurements described in Example 1. The testing results were shown as the following Table 1.

### Example 4: Preparation of high temperature resistant separator

The high temperature resistant separator with heat-resistant enhancement layer was prepared by the manners same as Example 1, except that the thermal-resistance precursor solution was instead by a thermal-resistance precursor solution which was prepared by mixing 100 g of isopropanol with 250 mg of titanium isopropoxide and 100 mg of 2-isopropylthioxanthon.

The properties and the thermal stability of the obtained high temperature resistant separator were determined by the measurements described in Example 1. The testing results were shown as the following Table 1.

### Example 5: Preparation of high temperature resistant separator

The high temperature resistant separator with heat-resistant enhancement layer was prepared by the manners same as Example 1, except that the thermal-resistance precursor solution was instead by a thermal-resistance precursor solution which was prepared by mixing 100 g of isopropanol with 250 mg of titanium isopropoxide, 50 mg of 2-isopropylthioxanthon and 75 mg of triallyl isocyanurate under ambient environment.

The properties and the thermal stability of the obtained high temperature resistant separator were determined by the measurements described in Example 1. The testing results were shown as the following Table 1.

### Comparative Example 1: Preparation of separator

The porous film obtained from Preparation Example was used as Comparative Example 1, and the properties and the thermal stability of the porous film were determined by the measurements described in Example 1, the testing results were shown as the following Table 1.

### Comparative Example 2: Preparation of separator

100 g of isopropanol was mixed and stirred with 25 mg of 2-isopropylthioxanthon under ambient environment to obtain a photo-reactive agent. The porous film obtained in the Preparation Example was immersed in the obtained photo-reactive agent for 30 seconds, took out and removed liquid residue, dried at 60°C for 5 minutes and irradiated under air environment with wavelength of 360 nm for a dose of 500 mJ/cm² to obtain a separator.

The properties and the thermal stability of the obtained high temperature resistant separator were determined by the measurements described in Example 1. The testing results were shown as the following Table 1.

### Comparative Example 3: Preparation of separator

The separator was prepared by the manners same as Comparative Example 2, except that the photo-reactive agent solution was instead by a photo-reactive agent solution which was prepared by mixing 100g of isopropanol with 50mg of 2-isopropylthioxanthon.

The properties and the thermal stability of the obtained high temperature resistant separator were determined by the measurements described in Example 1. The testing results were shown as the following Table 1.

### Comparative Example 4: Preparation of separator

Comparative Example 4 was conducted by the porous film obtained from Preparation Example. The porous film was immersed in the titanium alkoxide solution which was prepared by adding 250 mg of titanium isopropoxide to 100 g of isopropanol, for 30 seconds and took out, removed liquid residue, dried at 60 °C for 5 minutes to obtain a separator.

The properties and the thermal stability of the obtained high temperature resistant separator were determined by the measurements described in Example 1. The testing results were shown as the following Table 1.

**Table 1: The properties of thermal stability of separators of Examples and Comparative Examples**

| | Gurley (sec/100c.c.) | Tensile Strength (Kgf/cm²) | | Puncture Resistance (gf) | | Shrinkage (180°C/1hr, %) | | Rupture Temperature (°C) | Crack |
|---|---|---|---|---|---|---|---|---|---|
| | | MD | TD | initial | 150°C/1hr | MD | TD | | |
| Example 1 | 105 | 1663 | 1542 | 405 | 160 | 0.5 | 0.5 | 309 | ○ |
| Example 2 | 108 | 1646 | 1521 | 427 | 203 | 0.5 | 0.5 | 332 | ○ |
| Example 3 | 107 | 1691 | 1549 | 371 | 223 | 0.5 | 0.5 | 317 | ○ |
| Example 4 | 105 | 1613 | 1475 | 427 | 268 | 0.5 | 0.5 | 339 | ○ |
| Example 5 | 107 | 1752 | 1603 | 362 | 206 | 0.5 | 0.5 | 326 | ○ |
| Comparative Example 1 | 106 | 1736 | 1595 | 409 | 29 | NG | NG | 155 | X |
| Comparative Example 2 | 103 | 1659 | 1526 | 425 | 144 | NG | NG | 274 | X |
| Comparative Example 3 | 105 | 1646 | 1540 | 400 | 259 | NG | NG | 277 | X |
| Comparative Example 4 | 107 | 1673 | 1515 | 418 | 26 | 0.5 | 0.5 | 160 | ○ |

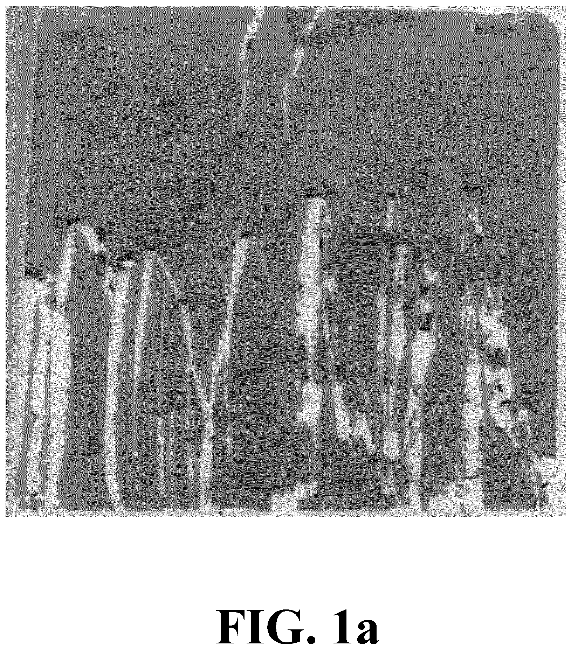

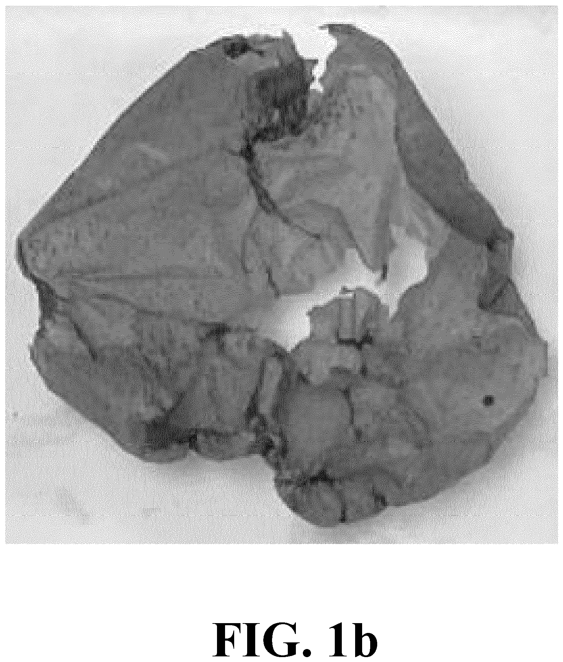

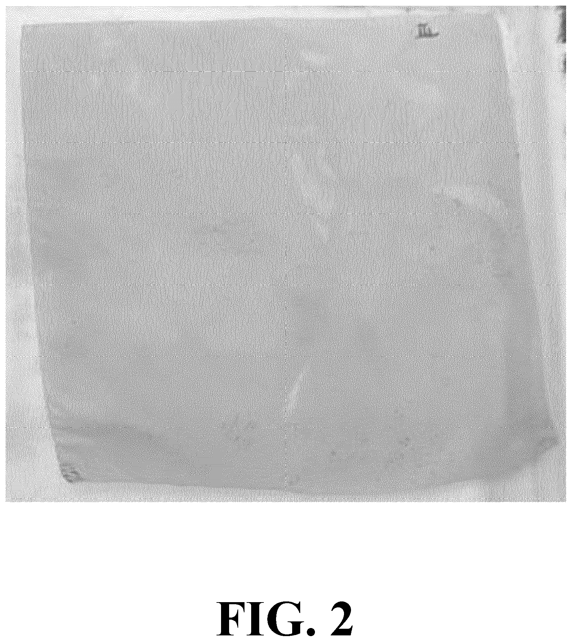

Form the data shown in Tale 1, the separators obtained in Examples 1 to 5 after heating at 180°C for 1 hour, temperature was higher than the melting point of polyolefin, the thermal shrinkage rate either in machine direction (MD) or transverse direction (TD) was less than 0.5%, and the ratio of MD/TD was nearly to 1. It means the thermal shrinkage of the film has been inhibited and thus, the film did not curly deform which might be caused by the different thermal shrinkages on different direction. The rupture temperature of the separators obtained in Examples is higher than 309°C. Comparing with Comparative Examples 1 to 4, the present high temperature resistant separators provided low thermal shrinkage at all directions, puncture resistance at elevate temperature, high rupture temperature and the melt integrity of the porous polyolefin substrate with inorganic layer containing inorganic particles. Figs. 1a and 1b shows the appearance of the high-temperature crack test, at 250°C, of the separators obtained from Comparative Example 1 and Comparative Example 3, respectively. As shown in Figs. 1a and 1b, the separators obtained from Comparative Example 1 and Comparative Example 3 were in severely curl deformation or broken down in pieces, which were unable to provide sufficiently separation between the electrodes. Fig. 2 shows the appearance of the high-temperature crack test, at 250°C, of the high temperature resistant separator of Example 3. As shown in Fig. 2, the high temperature resistant separator of Example 3 did not curly deform and maintain the integrity of the separator film. In addition, low amount of titanium alkoxide was added together with the crosslinking reaction initiated by photo-reactive agent in the porous polyolefin substrate uncovered by the inorganic layer on the surface of porous film, the surface of the porous film or the binder of the inorganic layer to generate a heat-resistant enhancement composite layer. Therefore, the disclosed heat-resistant enhancement layer of the high temperature resistant separator would not affect the permeability of the separator film or increase the impedance thereof. The disclosed high temperature resistant separator can effectively enhance the thermal resistance and dimension stability of the separator with polyolefin substrate at the temperature higher than melting point thereof and protect the battery at elevate temperature without affecting the ion conductivity at ambient environment.

Although particular embodiments have been shown and described, it should be understood that the above discussion is not intended to limit the present invention to these embodiments. Persons skilled in the art will understand that various changes and modifications may be made without departing from the scope of the present invention as literally and equivalently covered by the following claims.

## Claims

1. A high temperature resistant separator, comprising:
a porous film comprising a porous polyolefin substrate with a plurality of first porous structures and an inorganic layer, wherein the inorganic layer comprises a plurality of inorganic particles and a binder, and the inorganic layer is coated on at least one surface of the porous polyolefin substrate, and to form a plurality of second porous structures communicating with the first porous structures of the porous polyolefin substrate; and
a heat-resistant enhancement layer formed on a surface of the porous film and inner walls of the first porous structures and the second porous structures, wherein the heat-resistant enhancement layer is a composite layer formed by cross-linking a titanium alkoxide, a photo-reactive agent, the polyolefin and/or the binder of the surface and the inner walls of the first porous structures and the second porous structures of the porous film.

2. The high temperature resistant separator as claimed in claim 1, wherein the titanium alkoxide is titanium methoxide, titanium ethoxide, titanium isopropoxide or combinations thereof.

3. The high temperature resistant separator as claimed in claim 1, wherein the concentration of the titanium alkoxide ranges between 600 ppm and 3000 ppm.

4. The high temperature resistant separator as claimed in claim 1, wherein the concentration of the photo-reactive agent ranges between 150 ppm and 1500 ppm.

5. The high temperature resistant separator as claimed in claim 1, wherein the photo-reactive agent is 2-isopropylthioxanthone, thioxanthone, thioxanthone derivatives or combinations thereof.

6. The high temperature resistant separator as claimed in claim 1, a thermal shrinkage rate of the separator after heating at 180°C for 1 hour is less than 1% in all directions.

7. The high temperature resistant separator as claimed in claim 1, wherein the porous polyolefin substrate is a porous substrate of a single-layered or multi-layered polyethylene, polypropylene or copolymer thereof.

8. The high temperature resistant separator as claimed in claim 1, wherein the inorganic layer comprises 80 wt% to 99 wt% inorganic particles and 1 wt% to 20 wt% binder.

9. The high temperature resistant separator as claimed in claim 1, wherein the inorganic particles is Al₂O₃, Al(OH)₃, Boehmite (AlOOH), TiO₂, SiO₂, Mg(OH)₂, BaSO₄, BaTiO₃, SrTiO₃, HfO₂, SnO₂, CeO₂, MgO, NiO, CaO, ZnO, ZrO₂, SiC, B₄C, AlN, BN, Si₃N₄, TiN or combinations thereof.

10. The high temperature resistant separator as claimed in claim 1, wherein the binder is ethylene-vinyl acetate copolymer (EVA), poly(meth)acrylate, cross-linked (meth)acrylic resin, polyacrylamide (PAM), fluororubber, styrene-butadiene rubber (SBR), polyvinyl alcohol (PVA), polyvinyl butyral (PVB), polyvinylpyrrolidone (PVP), poly-n-vinyl acetamide, polyvinylidene fluoride (PVDF), polyurethane, or combinations thereof.

11. The high temperature resistant separator as claimed in claim 1, wherein the heat-resistant enhancement layer further comprises a crosslinking auxiliary agent.

12. The high temperature resistant separator as claimed in claim 11, wherein the crosslinking auxiliary agent is divinylbenzene, bisphenol-A dimethacrylate, bisphenol-A epoxydiacrylate, triallyl cyanurate, triallyl isocyanurate, pentaerythritol triallyl ether, butanediol diacrylate, ethylene glycol diacrylate, or combinations thereof.
